Europäisches Patentamt

European Patent Office

Office européen des brevets

(11) Publication number: **0 088 077**
**B1**

# EUROPEAN PATENT SPECIFICATION

(45) Date of publication of patent specification: **15.04.87**

(51) Int. Cl.⁴: **F 16 K 17/38**

(21) Application number: **81902696.4**

(22) Date of filing: **14.09.81**

(86) International application number:
**PCT/US81/01241**

(87) International publication number:
**WO 83/01100 31.03.83 Gazette 83/08**

(54) **FIRE SAFE VALVE.**

(43) Date of publication of application:
**14.09.83 Bulletin 83/37**

(45) Publication of the grant of the patent:
**15.04.87 Bulletin 87/16**

(84) Designated Contracting States:
**FR**

(56) References cited:
**EP-A-0 112 984
GB-A-2 096 280
NL-A-6 512 481
US-A-2 980 129
US-A-3 095 004
US-A-3 130 742
US-A-3 201 174
US-A-3 377 957
US-A-3 638 733
US-A-3 696 831**

(73) Proprietor: **SMITH INTERNATIONAL, INC.
Brookhollow One, Suite 100 9900 Northwest
Freeway
Houston, TX 77092 (US)**

(72) Inventor: **BESON, John
10938 Leaning Ash
Houston, TX 77079 (US)**
Inventor: **NIGHTINGALE, Maurice H.
Fieldhurst Rooksmoor Hill Woodchester
Stroud.Gloucestershire (GB)**
Inventor: **FURLEY, Richard G.
Langtoft Road
Stroud Gloucestershire (GB)**

(74) Representative: **Rinuy, Guy
Cabinet Rinuy et Santarelli 14, Avenue de la
Grande Armée
F-75017 Paris (FR)**

Courier Press, Leamington Spa, England.

## Description

Technical field

This invention relates to valves, and more particularly to through-conduit, non-rising stem gate valves which will withstand extreme heat under fire conditions without external or through leakage or pressure lock.

Background art

Fire has always been a hazard to oil and gas operations, and it is essential that equipment maintain its functions under such conditions. Valves are among the equipment that becomes subjected to fire conditions and must meet the requirements of the "API Recommended Practice Fire Test for Valves" of the American Petroleum Institute referenced API RP6F, Second edition, December 1980. In summary those requirements include maintaining a 3750 psi (258.6 bar) upstream pressure under fire conditions, a 5000 psi (345 bar) upstream pressure after cooling, and the ability to operate the valve against full rated pressure after it has cooled.

In a conventional through-conduit, non-rising stem gate valve, the valve body has a flow way through which the pipeline fluids pass and a chamber intersecting the flow way interiorly of the valve body. A gate is disposed within the chamber for reciprocation across the flow way where, in the upper position, for example, a flow port in the gate registers with the flow way to permit line fluids to flow through the valve, and in the lower position the gate blocks the flow through the flow way. The gate is reciprocated within the valve chamber by mechanical means, such as a hand wheel mounted on a stem connected to the gate, causing the gate to move across the flow way to open and close the valve. A bonnet closes the stem opening of the valve chamber. Stem packing seals between the stem and bonnet.

Under fire conditions, such a conventional gate valve is engulfed in flames which may heat the valve to temperatures as high as 1100° Celsius. Such extreme heat causes (1) the valve seals to deteriorate, and (2) the valve fluids to vaporize. The loss of seals causes external and through leakage. Vaporization of trapped valve fluids creates dangerously high pressures within the valve chamber.

NL—A—6 512 481 to Dikkers discloses a valve for pipe-line having a body and an inner chamber intersected by upstream and downstream ports wherein a closure member is adapted to close off said ports from said chamber. The chamber is closed by a cap through which the stem of the closure member may slide. This cap is provided with a space communicating on one hand with the chamber and on the other hand with a safety device through a duct. This safety device is an anti-explosion device, which prevents any undue increase of pressure inside the valve chamber by the opening of a spring-loaded ball joint, which puts into communication the space provided in the cap with the exterior, or with the inside of the pipe-line. Such a device is not entirely reliable because it comprises mechanical means and especially it is out of service when the valve stem is in its highest position wherein the abutment of the valve stem upon a bearing prevents any communication between the inner chamber and the space provided in the cap.

Prior art patents which have disclosed fusible washer elements in valves or related equipment include the following: US—A—4,214,600 to Williams, Jr. et al.

In Williams 4,214,600 a fusible washer in a valve bonnet supports a bearing which maintains the valve stem and a corresponding bonnet shoulder in the nonengaged position. When the fusible washer is exposed to fire, it melts and is drained outside the valve body. As the fusible washer melts, it no longer supports the bearing, permitting stem and bonnet shoulder to move into sealing metal-to-metal contact to prevent leakage. This however, closes off any passageway for fluid, so venting fluid is not possible.

In addition, it will be appreciated that high temperature can cause vaporization of internal valve fluids within valve chamber. If the valve is in a closed position, vaporizing valve fluids greatly increase the pressure between gate segments causing them to seal with seats. Thus the internal valve fluids cannot be displaced between the gate segments and seats or between the seats and valve body. Such pressure build-up poses the danger of overloading the bonnet bolting and other structural elements of the valve.

Disclosure of the invention

The fire safe valve which is the subject-matter of the present invention allows to overcome all the disadvantages of these prior art devices.

The valve according to the present invention has a massive metal body with a chamber therein wherein said chamber is intersected by upstream and downstream ports and a closure member in said chamber adapted to close off said ports from said chamber, wherein a passageway connects the chamber with the upstream port, said passageway including a first passageway portion extending from said chamber through the wall of said body to the exterior thereof and a second passageway portion extending through said wall to the upstream port, a safety device for vending fluid closing off said first passageway portion from said second passageway portion under normal environmental conditions and said member having a portion extending externally of said valve body. And this valve is characterized in that said safety device is a heat-intensifying member being provided with an internal bore having a first channel extending from said first passageway portion into said external member portion and a second channel extending from said external member portion to said second passageway portion, and a thermally responsive element in said bore is disposed substantially entirely within said external member portion between said first and second channels, whereby, under fire conditions, said element is substantially entirely exposed to extreme heat and in response thereto communicates said first channel to said second channel thereby communicating said first passageway portion to said second passageway portion.

In the valve structure according to the invention, the thermally responsive element, being located outside the valve housing, will melt prior to a dangerous build-up of internal valve pressure and will allow internal valve fluid to be displaced through the upstream flow port, thereby equalizing the internal valve pressure and the upstream pressure. The possibly destructively high vapor pressures are thereby vented and neutralized. The thermally responsive element being disposed in the portion of the member which extends beyond the outside of the valve body, when the valve is surrounded by high temperature, this element is readily heated to its melting point.

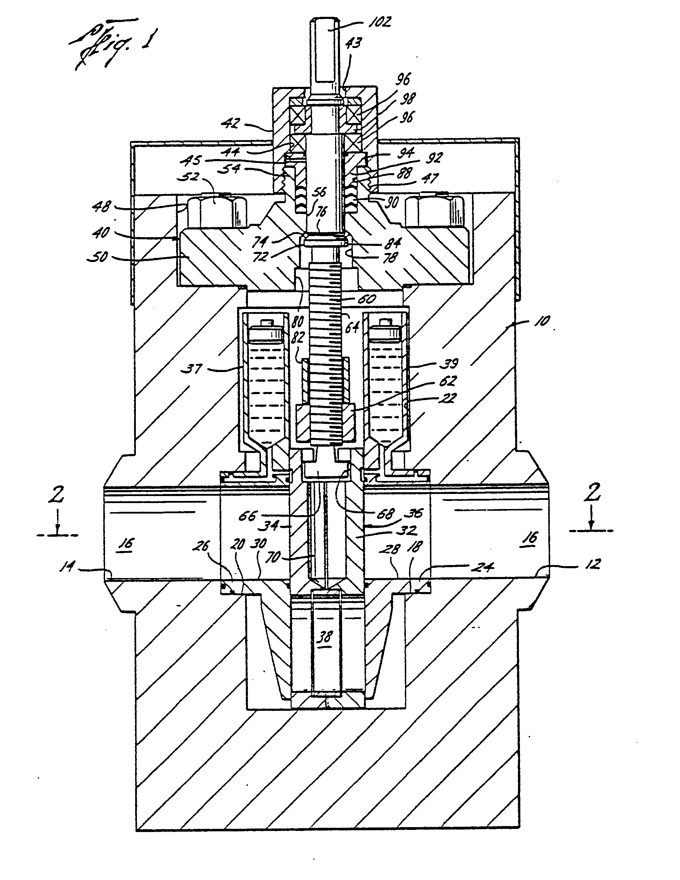

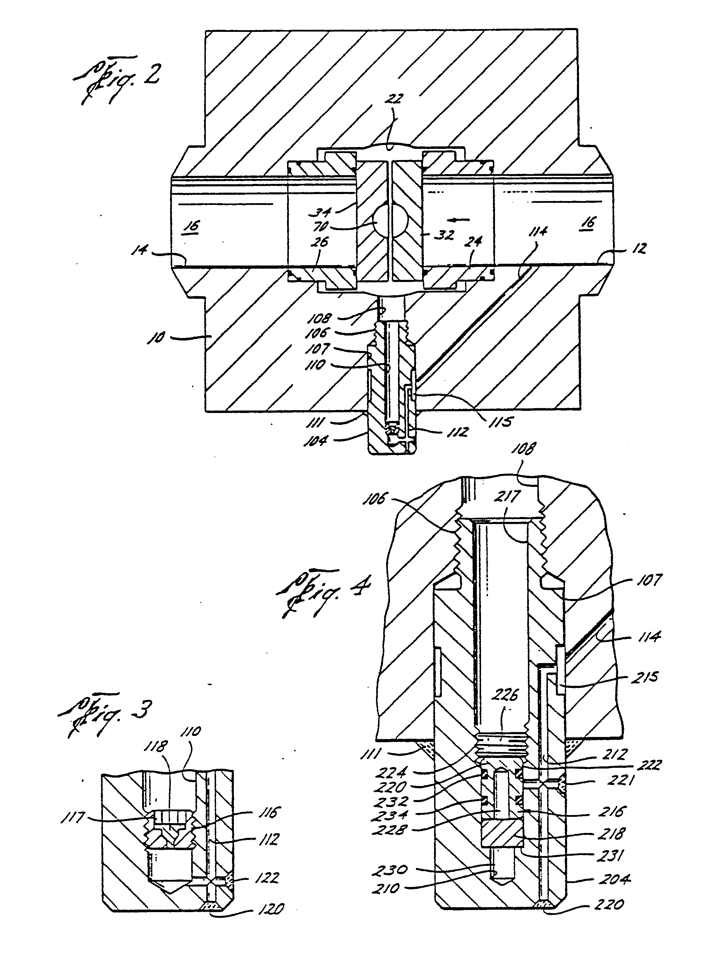

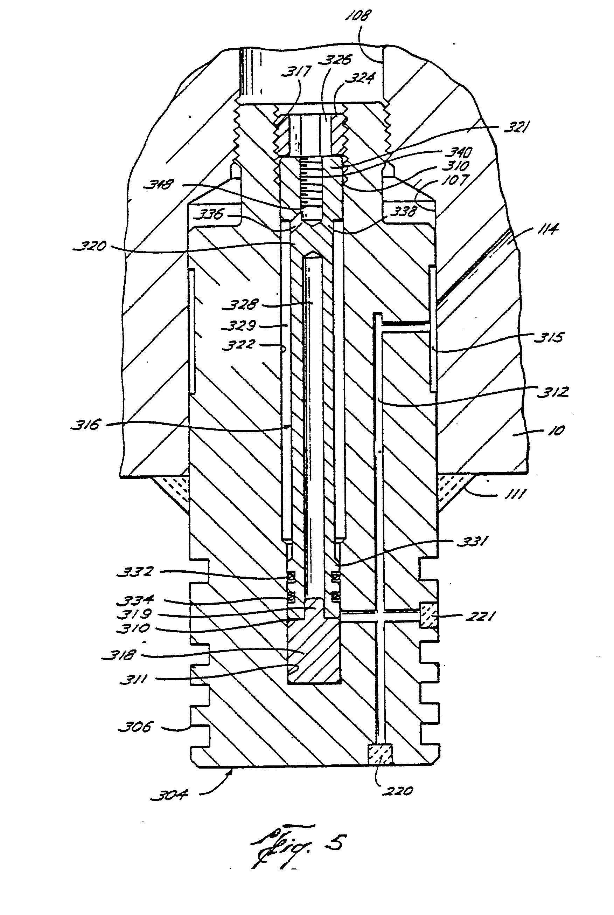

In accordance with the preferred embodiment of the invention shown upon figures 1 to 3, the fire safe valve includes a pressure release port which communicates from the space between the segments of the gate to the upstream side of the flow way. A heat intensifier plug having a fusible center is disposed at the exit of the port and external of the valve to block fluid flow through the port. Upon the heating of the valve, the fusible center melts, opening the pressure release port to fluid flow and permitting the internal valve pressure and upstream pressure to equalize. This eliminates the possibility that the pressure will build up to a dangerously high level. In alternative embodiments shown upon figures 4 and 5, the fusible element is shielded from direct contact with the line fluids through a piston element which, upon melting of the fusible element, slides further down the bore to open up the pressure release port. The piston element is also provided with elastomer O-rings which, when exposed to the high temperature environment, disintegrate and thus provide an additional passage means for the trapped line fluids to leak to the pressure release port.

Brief description of drawings

For a detailed description of a preferred embodiment of the invention, reference will now be made to the accompanying drawings wherein:

Figure 1 is a vertical sectional view of one embodiment of the valve of the invention;

Figure 2 is a horizontal sectional view taken at line 2—2 of Figure 1, illustrating the features characterizing the invention;

Figure 3 is an enlarged view of a portion of Figure 2;

Figure 4 is an enlarged view similar to Figure 3, depicting an alternative embodiment of the fusible plug shown in Figure 3.

Figure 5 is a view similar to Figure 4, depicting yet another alternative embodiment of the heat intensifier element of the present invention.

Best mode of carrying out the invention

The elements of the valve to be described herein which are utilized during normal operation are described in detail in various other patents of Smith International, Inc., including for example U.S. Patent No. 2,657,898 to Volpin, to which reference may be made. Only those valve details necessary for the understanding of this invention will be described here.

Referring initially to Figure 1, there is shown a through-conduit, non-rising stem gate valve comprising a valve body or housing 10 having opposed flow ports 12, 14 forming a flow way 16 through which line fluids pass. In the embodiment shown, the valve body has been machined from a steel block, but suitable castings or forgings may be useful for some applications. As illustrated, flow port 12 is the upstream or inlet end of the valve and flow port 14 is the downstream or outlet end. The interior ends of the flow ports 12, 14 are provided with coaxial counterbores 18, 20, respectively, which circumscribe flow ports 12, 14.

A gate chamber 22 intersects flow way 16 interiorly of housing 10 generally at right angles thereto. The gate chamber 22 and flow port counterbores 18, 20 are adapted to receive a pair of opposed seats 24, 26. Each seat 24, 26 has an outwardly facing surface shaped substantially complimentary to the shape of counterbores 18, 20 and gate chamber 22. Members 24, 26 include a neck or hub 28, 30 received by each counterbore 18, 20, respectively. Each seat 24, 26 is provided with a transverse opening coaxial and registering with flow ports 12, 14 and flow way 16, and generally of the same diameter. The inwardly facing surface of each seat member 24, 26 is shaped to cooperate in sliding engagement with the exterior abutting face of a gate segment 32 or 34 as will be described hereinafter.

The seats 24, 26 and their appurtenances are identical in construction and arranged symmetrically on opposite sides of gate chamber 22 so that the description of one will be applicable to the other.

A gate 36 between the seats forms a closure member for selectively closing off and opening communication between the upstream and downstream flow ports 12, 14. Gate 36 is preferably constructed as a pair of mating gate segments 32, 34 disposed between the seats 24, 26 within gate chamber 22 for reciprocation across flow way 16. Gate segments 32, 34 of gate 36 are provided near their upper ends with a closure section adapted to prevent fluid flow through flow way 16 when the gate is lowered to the closed position as illustrated in Figure 1. Sealing material to provide a seal between the seat hubs 28, 30 and the counterbores 18, 20 and between the gate segments 32, 34 and the seats 24, 26 is provided from reservoir 37, 39 in a manner well known in the art, as shown for example in U.S. Patent No. 2,657,898 to Volpin.

The upper end of the gate chamber 22 within housing 10 is closed by a wall comprising a bonnet, designated generally by the numeral 40, and a bonnet cap 42. Housing 10 has a counterbore 48 which receives substantially all of bonnet 40. Bonnet 40 is provided about its lower end with an annular bolt flange 50 for connecting bonnet 40 to the upper end of housing 10 by means such as bolts 52. Bonnet 40 includes an upwardly projecting threaded hub 54 for engagement with the threads on the lower portion of cap 42.

Gate 36 is mounted for reciprocation between seats 24, 26 by stem 60 and stem nut 62. Nut 62 threadingly engages the exterior threads 64 on stem 60, and is attached to the top of gate segments 32, 34 through the cooperating engagement of the T-shaped lower end 66 within recess 68. Upon the rotation of stem 60, stem nut 62 with gate 36 is raised or lowered within gate chamber 22 to open or close the valve. Gate segments 32, 34 form an interior chamber 70 to receive stem 60 as gate 36 is raised to the open position.

Bonnet 40 has an axial bore 56 for receiving stem 60. Stem 60 has a backseat flange 72 radially projecting from and integral with stem 60 above exterior threads 64. Backseat flange 72 has an upwardly facing rounded annular shoulder 74 and a groove 76 adjacent thereto above the backseat.

Axial bore 56 includes a counterbore 78 large enough to clear the backseat flange 72, and a larger counterbore 80 to receive a stop sleeve 82 which is mounted on the stem 60 above the nut 62. Counterbore 78 terminates at its upper end in an internal downwardly facing bevelled shoulder or backseat 84.

The upper end of stem 60 above the backseat flange extends through a stuffing box 88 housed within the bonnet. The stuffing box contains packing 90 to serve as a seal about stem 60.

A packing adapter ring 92 is inserted into the stuffing box above the packing and is provided with a flange 94 which is received within the counterbore 45 of the bonnet cap 42 and is secured between the bottom of the counterbore 45 and the upper end of the bonnet hub 54. Bearings 96 and a bearing bushing 98 are mounted on the stem above packing adapter ring 92 in bore 44 of the bonnet cap 42. The upper end of the stem is provided with flats 102 or other suitable means for engagement by a hand wheel, a wrench, or other valve operator.

Means are provided for establishing communication between internal valve chamber 22 and upstream flow port 12 of the valve. In the embodiment shown in Fig. 2 this consists of a bore 108 extending from valve chamber 22 to the exterior of the valve through valve housing 10 and a passageway 114 extending from near the external entrance of bore 108 to upstream flow port 12 through valve housing 10. Bore 108 includes a counterbore 107 extending into valve housing 10 from the external entrance of bore 108. A thermally responsive heat intensifier member 104 is inserted into counterbore 107 and is threadedly received at 106 in bore 108. A portion of heat intensifier member 104 extends beyond the outside wall of the valve body 10 and is secured by welding as at 111. The welding insures a leak proof seal around member 104. Member 104 is preferably made of a good heat conducting material such as steel.

Heat intensifier member 104 includes a coaxial, longitudinal bore 110 extending from the inner end of member 104 toward its outer end. Although bore 110 extends into that portion of member 104 projecting outside valve housing 10, bore 110 does not pass completely through member 104 and stops short of passing through the outer end of member 104. Member 104 also includes an enlarged annular groove 115 around its mid-portion for intersection with passageway 114. Groove 115 is enlarged to insure alignment with passageway 114 upon installation of member 104 in bore 108 and counterbore 107. A duct 112 through member 104 connects the bottom of bore 110 with annular groove 115 to provide fluid communication therebetween. As shown in Figures 2 and 3, duct 112 may be formed by drilling a hole parallel with bore 108 in member 104 and then drilling two transverse holes, one connecting with bore 110 and the other with groove 115. As shown in Figure 3, weld metal is used to close openings 120 and 122 formed by such drilling.

Referring now to Figure 3 it will be seen that the bottom of longitudinal bore 110 is threaded to threadingly receive a piston or plug 116. Plug 116 has a funnel-shaped orifice 117 extending longitudinally therethrough for receiving a fusible material 118. Plug 116 is positioned so that when the member 104 is installed in the valve body the fusible portion 118 is outside valve body 10 and also blocks fluid flow through bore 110 and into duct 112.

Referring now to Figure 4, there is illustrated an alternative thermally responsive heat intensifier member 204 and piston or plug element 216. Alternative heat intensifier 204 and plug 216 are particularly useful for wet sour gas service since, as will be seen from the description below, its fusible element 218 is protected from the well fluid or vapors. Those elements of Figure 4 common to the preferred embodiment shown in Figures 1—3 bear the same reference numerals.

Heat intensifier member 204 is similar to member 104 of Figures 2 and 3 in that member 204 includes a coaxial longitudinal bore 210, an enlarged annular groove 215, and a duct 212. However, bore 210 includes an outer counterbore 222 and an inner counterbore 217, inner counterbore 217 having a greater diameter than outer counterbore 222. Outer counterbore 222 is located in that portion of member 204 projecting outside of valve housing 10. Duct 212 is similar to duct 112 except that the transverse hole connecting with bore 210 communicates with outer counterbore 222. Drill holes for duct 112 are again filled with weld material at 220, 221.

Plug 216 comprises a cylindrical body portion 220 to be received within outer counterbore 222 of bore 210, two O-rings 232, 234 housed within annular grooves around the perimeter of body portion 220, and a cylindrical chamber 228 concentrically disposed within the outwardly facing end of body portion 220. The inner counterbore 217 of longitudinal bore 210 of heat intensifier member 204 has, at the end most distal from the valve body, internal threads 224 which directly abut outer counterbore 222. Threads 224 are provided for threadedly securing a hollow center retainer screw 226 to retain plug 216 within outer counterbore 222, and facilitate exchange of said plug if necessary or desired.

Between plug 216 and the bottom of bore 210, a fusible slug 218 is inserted within the distal end portion of outer counterbore 222. Fusible slug 218 is similar in design and function to fusible element 118 described with respect to Figures 2 and 3, but, unlike element 118, it is not directly exposed to the well fluid, gases or vapors within counterbores 217, 222. This embodiment is therefore of particular advantage in wet sour gas environments since the working medium will not be able to corrode slug 218 before the latter can serve its purpose as a high temperature pressure vent.

Fusible slug 218, when heated to its melting point, will drain into chambers 228 and 230, thus vacating the end portion of outer counterbore 222. The internal valve pressure, which is in communication with plug 216 through the central opening of hollow retainer screw 226, presses down on piston or plug 216 until it is backseated against shoulder 231 formed by outer counterbore 222. In that backseated position, duct 212 will be in communication with counterbores 217, 222 and thus permit the displacement of internal valve fluids from valve chamber 22 into upstream flow port 12, as described previously with respect to the embodiment of Figures 2 and 3.

In addition to fusible slug 218, O-ring 232 also permits high pressure vapors to escape under elevated temperature conditions because the elastomer material of O-ring 232 will disintegrate at or around the melting point of slug 218. Thus, even if plug 216 should not be able to slide freely, the high pressure vapors trapped in inner counterbore 217 will leak past disintegrated O-ring 232 and thus safely vent into duct 212 and thus passageway 114.

Referring now to Figure 5, another alternative embodiment of the heat intensifier member is shown in which new thermally responsive heat intensifier member 304 includes a plug 316 containing a fusible element 318 which is protected from direct exposure to the well fluid or vapors and, when melting, drains entirely inside of cylindrical chamber 328 of plug 316. Those elements of Figure 5 common to the preferred embodiment shown in Figures 1—3 bear the same reference numerals.

Heat intensifier member 304 is similar to member 204 of Figure 4 in that member 304 includes a coaxial longitudinal bore 310, an enlarged annular groove 315, and a duct 312. Bore 310 includes a bottom portion 311, an outer counterbore 322, and an inner counterbore 317. Inner counterbore 317 has a larger diameter than outer counterbore 322. Bottom portion 311 is located in that portion of member 304 projecting outside of valve housing 10. Inner counterbore 317 is adjacent bore 108 in housing 10. Duct 312 is similar to duct 212 except that the transverse hole connecting with outer counterbore 322 communicates with bottom portion 311 of bore 310.

Fusible slug 318 is a generally cylindrical shaped pellet having a rod-like projection 319 at one end and is made of a fusible material. Slug 318 is sized to be received within bottom portion 311 of bore 310 with projection 319 extending beyond the intersection of duct 312 and bore 310.

Plug 316 has an elongated cylindrical body 320 having an enlarged cylindrical head 321 and an enlarged cylindrical bottom 331. A cylindrical bore or chamber 328 is concentrically disposed within plug 316 and extends through enlarged bottom 331 and almost the entire length of body 320. Enlarged bottom 331 is slidingly received within bottom portion 311 of bore 310 with the chamber 328 receiving rod-like projection 319 of slug 318. The engagement of slug 318 and plug 316 occurs at the intersection of bore 310 and duct 312. The enlarged head 321 is slidingly received by the inner end of outer counterbore 322 with a portion of head 321 projecting into inner counterbore 317. The body portion of plug 316 between head 321 and bottom 331 creates an annular space 329 within outer counterbore 322.

Two O-rings 332, 334 are housed within annular grooves around the perimeter of bottom portion 331. O-rings 332, 334 are made of elastomer material and are located such that, with plug 316 in the fully inserted position, both rings are anterior of the intersection of bore 310 and duct 312.

Inner counterbore 317 is provided with internal threads 324 used to threadedly secure a hollow center retainer screw 326 within inner counterbore 317 for biasing plug 316 against fusible slug 318 and to facilitate exchange of said plug if necessary or desired. The hollow center of retainer screw 326 is apposite a blind bore 348 concentrically disposed within head 321. Blind bore 348 has internal handling threads 340 for ease of handling plug 316 during insertion or removal. Duct passages 336, 338 are drilled into blind bore 348 from within the main body portion 320 of plug 316 for fluid communication between inner counterbore 317 and annular space 329.

To further assist in more rapidly elevating the temperature within plug 316 to the melting point of slug 318, heat intensifier member 304 is provided with heat conducting fins 306 in the form of annular grooves cut within that portion of member 304 which extends exteriorly of valve body 10.

Under high temperature, fusible slug 318 melts with the molten material flowing into chamber 328 of plug 316 as internal valve pressure acts on plug 316. Plug 316 moves outwardly in housing 10 under the internal valve pressure until O-rings 332, 334 pass the intersection of bore 310 and duct 312 and into the bottom portion 311 of bore 310 previously housing fusible slug 318 in its solid state. Once O-rings 332, 334 pass the intersection interval valve fluids are displaced into the upstream flow ports via duct 312 and passageway 114.

O-rings 332, 334 present an additional high-temperature pressure relief device because the elastomer material will disintegrate when the temperature within heat intensifier member 304 reaches the level that would normally cause slug 318 to melt. Thus, even if plug 316 should for some reason not be able to move freely when the space occupied by slug 318 is vacated, the destruction of elastomer O-rings 332, 334 will also permit the high pressure vapors contained within bore 310 to leak through and vent into duct 312.

The fusible elements 118, 218 and 318 may be made of any suitable low melting point materials, such as alloys of bismuth, antimony, tin, lead or zinc, many of which are well known in the art and need not be described here. Such materials should be such as to substantially retain their strength at ordinary operating temperatures, even in situations where the valve may be exposed to the sun in desert locations. Thus, the fusible material preferably will melt at a temperature between about 90°C and about 300°C. A lead-bismuth alloy which melts at 124°C has been found to be a suitable material. Such a material is marketed by Mining and Chemical Products Ltd. under the name "Cerro Base MCP124". Another material which works satisfactorily is a soft solder made of 95.5% tin, 5.25% antimony and 0.07% lead which has good strength characteristics up to 200°C and is completely liquid at 243°C.

This invention has been described principally in terms of its application to a gate valve. However, it is also usable in other valves, such as plug valves, particularly the split-core type of plug valve.

**Claims.**

1. A valve having a massive metal body (10) with a chamber therein wherein said chamber (22) is intersected by upstream and downstream ports (12 and 14) and a closure member (36) in said chamber adapted to close off said ports from said chamber, wherein a passageway connects the chamber with the upstream port (12), said passageway including a first passageway portion (107, 108) extending from said chamber through the wall of said body to the exterior thereof and a second passageway portion (114) extending through said wall to the upstream port, a safety device for venting fluid (104, 204, 304) closing off said first passageway portion from said second passageway portion under normal environmental conditions and said member having a portion extending externally of said valve body, characterized in that said safety device is a heat-intensifying member (104, 204, 304) being provided with an internal bore having a first channel (110, 210, 310) extending from said first passageway portion into said external member portion and a second channel (112, 212, 312) extending from said external member portion to said second passageway portion, and a thermally responsive element (118, 218, 318) in said bore disposed substantially entirely within said external member portion between said first and second channels, whereby, under fire conditions, said element is substantially entirely exposed to extreme heat and in response thereto communicates said first channel to said second channel thereby communicating said first passageway portion to said second passageway portion.

2. A valve as defined in claim 1 wherein said internal bore portion which extends into said external member portion includes a blind bore section having a first bore section (222), a second terminal blind bore section (210), and a shoulder (231) between said first and second bore sections, said thermally responsive element disposed in said first bore section and abutting said shoulder (231), said thermally responsive element (218) including a piston member (216), said piston member being disposed in said first bore section and engaging said thermally responsive element.

3. A valve as defined in claim 1 in which said thermally responsive element includes a fusible member (118, 218, 318) which melts at a predetermined temperature.

4. A valve as defined by claim 1 in which the thermally responsive element includes a fusible member with a melting point between about 90°C and about 300°C.

5. A valve as defined by claim 1 wherein said thermally responsive element includes elastomer seals (232, 234, 332, 334) which lose their sealing ability and permit fluid communication between said chamber and said upstream port at a predetermined temperature.

6. A valve as defined by claim 1 wherein said thermally responsive element includes elastomer seals which lose their sealing ability and permit fluid communication between said chamber and said upstream port at temperatures within said element of more than 220°C.

7. A valve as defined by claim 2 wherein said piston member has a central counterbore at one end.

8. A valve as defined by claim 3 further including retainer means for securing said piston member.

9. A valve as defined by claim 3 wherein said predetermined temperature is between 220°C and 320°C.

10. The valve of claim 3 further including means for preventing the exposure of said material to internal valve fluids.

11. The valve as defined by claim 1 further including a plug (216, 316) slidably disposed in said first channel between a first position blocking fluid flow through said bore and a second position permitting fluid flow through said bore, said material, while in the solid state, preventing said plug from moving from said first position to said second position and allowing said plug to move from said first position to said second position while in the liquid state.

12. The valve as defined by claim 11 wherein said plug (216, 316) has a chamber (228, 328) and said fusible material (218, 318) in the liquid state flows into said chamber.

13. The valve as defined by claim 12 wherein said fusible material (318) has a portion thereof (319) projecting into said chamber (328) while said fusible material is in the solid state.

14. The valve as defined by claim 11 further including means for retaining said plug in said first channel.

**Patentansprüche**

1. Ventil mit einem massiven Metallgehäuse (10) mit einer darin befindlichen Kammer, wobei die Kammer (22) durch zustrom- und abstromseitige Anschlüsse (12 und 14) durchschnitten wird, und einem Verschlußteil (36) in der Kammer, das ausgelegt ist, die Anschlüsse von der Kammer abzutrennen, wobei ein Durchlaß die Kammer mit dem zustromseitigen Anschluß (12) verbindet, der Durchlaß einen ersten Durchlaßanschnitt (107, 108) enthält, der sich von der Kammer durch die Wand des Gehäuses bis in den Außenraum erstreckt und einen zweiten Durchlaß-Abschnitt (114), der sich durch die Wand zu dem zustromseitigen Anschluß erstreckt, einem Sicherheitsgerät zum Lüften von Fluid (104, 204, 304), das unter normalen Umgebungsbedingungen den ersten Durchlaßabschnitt von dem zweiten Durchlaßabschnitt abschließt und das Glied einen sich außerhalb des Ventilgehäuses erstreckenden Abschnitt besitzt, wobei das Sicherheitsgerät ein Wärmeintensivierungsglied (104, 204, 304) ist, das mit einer Innenbohrung mit einem sich von dem ersten Durchlaßabschnitt in den äußeren Gliedabschnitt erstreckenden ersten Kanal (110, 210, 310) und einem sich von dem äußeren Gliedabschnitt zu dem zweiten Durchlaßabschnitt erstreckenden zweiten Kanal (112, 212, 312) versehen ist und ein thermisch ansprechendes Element (118, 218, 318) in der Bohrung im wesentlichen insgesamt innerhalb des externen Gliedabschnittes zwischen dem ersten und dem zweiten Kanal angeordnet ist, wodurch unter Brandbedingungen das Element im wesentlichen insgesamt extremer Hitze ausgesetzt ist und in Reaktion darauf den ersten Kanal mit dem zweiten Kanal verbindet und dadurch den ersten Durchlaßabschnitt mit dem zweiten Durchlaßabschnitt verbindet.

2. Ventil nach Anspruch 1, wobei der innere Bohrungsabschnitt, der sich in den äußeren Gliedabschnitt hinein erstreckt, einen Blindbohrungsbereich mit einem ersten Bohrungsbereich (222), einen zweiten End-Blindbohrungsbereich (210) und eine Schulter (231) zwischen dem ersten und zweiten Bohrungsbereich enthält, das thermisch ansprechende Element in dem ersten Bohrungsbereich untergebracht ist und an der Schulter (231) anliegt, das thermisch ansprechende Element (214) ein Kolbenglied (216) enthält, wobei das Kolbenglied in dem ersten Bohrungsbereich angeordnet und mit dem thermisch ansprechenden Element in Eingriff ist.

3. Ventil nach Anspruch 1, bei dem das thermisch ansprechende Element ein bei einer vorbestimmten Temperatur schmelzendes Aufschmelzglied (118, 218, 318) enthält.

4. Ventil nach Anspruch 1, bei dem das thermisch ansprechende Element ein Aufschmelzglied enthält mit einem Schmelzpunkt zwischen etwa 90°C und etwa 300°C.

5. Ventil nach Anspruch 1, bei dem das thermisch ansprechende Element elastomere Dichtungen (232, 234, 332, 334) enthält, die bei einer vorbestimmten Temperatur ihre Dichtfähigkeit verlieren und Fluidverbindung zwischen der Kammer und dem zustromseitigen Anschluß zulassen.

6. Ventil nach Anspruch 1, bei dem das thermisch ansprechende Element elastomere Dichtungen enthält, die ihre Dichtfähigkeit verlieren und Fluidverbindung zwischen der Kammer und dem zustromseitigen Anschluß zulassen bei Temperaturen innerhalb des Elementes von mehr als 220°C.

7. Ventil nach Anspruch 2, bei dem das Kolbenglied an einem Ende eine zentrale Senkbohrung enthält.

8. Ventil nach Anspruch 3, weiter mit Haltemitteln zum Sichern des Kolbengliedes.

9. Ventil nach Anspruch 3, bei dem die vorbestimmte Temperatur zwischen 220°C und 320°C liegt.

10. Ventil nach Anspruch 3, weiter Mittel enthaltend zum Verhindern der Freilegung des Materials für interne Ventil-Fluide.

11. Ventil nach Anspruch 1, weiter einen Stopfen (216, 316) enthaltend, der gleitbar in dem ersten Kanal zwischen einer ersten, Fluidströmung durch die Bohrung sperrenden Stellung und einer zweiten, Fluidströmung durch die Bohrung zulassenden Stellung untergebracht ist, wobei das Material im festen Zustand eine Bewegung des Stopfens von der ersten Stellung in die zweite Stellung verhindert und dem Stopfen die Bewegung von der ersten Stellung in die zweite Stellung erlaubt, wenn es im flüssigen Zustand ist.

12. Ventil nach Anspruch 11, bei dem der Stopfen (216, 316) eine Kammer (228, 328) besitzt und das schmelzbare Material (218, 318) im flüssigen Zustand in die Kammer fließt.

13. Ventil nach Anspruch 12, bei dem das schmelzbare Material (318) einen Abschnitt (319) besitzt, der, wenn das schmelzbare Material im festen Zustand ist, in die Kammer (328) hinein vorsteht.

14. Ventil nach Anspruch 11, weiter mit Mitteln zum Zurückhalten des Stopfens in dem ersten Kanal.

**Revendications**

1. Vanne comportant un corps métallique massif (10) renfermant une chambre, dans laquelle ladite chambre (22) est coupée par des orifices amont et aval (12 et 14) et un élément (36) d'obturation situé dans ladite chambre et conçu pour isoler lesdits orifices de ladite chambre, dans laquelle un passage relie la chambre à l'orifice d'amont (12), ledit passage comprenant un premier tronçon de passage (107, 108) s'étendant de ladite chambre à travers la paroi dudit corps jusqu'à l'extérieur de celui-ci et un second tronçon de passage (114) s'étendant à travers ladite paroi jusqu'à l'orifice d'amont, un dispositif de sûreté pour l'évacuation d'un fluide (104, 204, 304) isolant ledit premier tronçon de passage dudit second tronçon de passage dans des conditions ambiantes normales et ledit élément comportant une partie s'étendant à l'extérieur dudit corps de la vanne, ledit dispositif de sûreté est un élément (104, 204, 304) d'intensification de la chaleur présentant un alésage intérieur possédant un premier canal (110, 210, 310) s'étendant dudit premier tronçon de passage jusque dans ladite partie extérieure de l'élément et un second canal (112, 212, 312) s'étendant de ladite partie extérieure de l'élément jusqu'audit second tronçon de passage, et une organe thermosensible (118, 218, 318) situé dans ledit alésage, disposé sensiblement en totalité à l'intérieur de ladite partie extérieure de l'élément entre lesdits premier et second canaux, de manière que, dans des conditions d'incendie, ledit organe soit exposé pratiquement en totalité à une chaleur extrême et, en réponse à celle-ci, fasse communiquer ledit premier canal avec ledit second canal, faisant ainsi communiquer ledit premier tronçon de passage avec ledit second tronçon de passage.

2. Vanne selon la revendication 1, dans laquelle ledit tronçon intérieur de l'alésage qui s'étend jusque dans ladite partie extérieure de l'élément comprend un tronçon d'alésage borgne possédant une première section d'alésage (222), une seconde section d'alésage borgne terminale (210) et un épaulement (231) entre lesdites première et seconde sections d'alésage, ledit organe thermosensible étant disposé dans ladite première section d'alésage en butée contre ledit épaulement (231), ledit organe thermosensible (218) comprenant un élément piston (216), ledit élément piston étant disposé dans ladite première section d'alésage et portant contre ledit organe thermosensible.

3. Vanne selon la revendication 1, dans laquelle ledit organe thermosensible comprend un élément fusible (118, 218, 318) qui fond à une température prédéterminée.

4. Vanne selon la revendication 1, dans laquelle ledit organe thermosensible comprend un élément fusible ayant un point de fusion compris entre environ 90°C et environ 300°C.

5. Vanne selon la revendication 1, dans laquelle ledit organe thermosensible comprend des joints d'étanchéité (232, 234, 332, 334) en élastomère qui perdent leur possibilité d'étanchéité et permettent une communication de fluide entre ladite chambre et ledit orifice d'amont à une température prédéterminée.

6. Vanne selon la revendication 1, dans laquelle ledit organe thermosensible comprend des joints d'étanchéité en élastomère qui perdent leur possibilité d'étanchéité et permettent une communication de fluide entre ladite chambre et ledit orifice d'amont à des températures de plus de 220°C à l'intérieur dudit organe.

7. Vanne selon la revendication 2, dans laquelle ledit élément piston présente un contre-alésage central à une extrémité.

8. Vanne selon la revendication 3, comprenant en outre des moyens de retenue destinés à fixer ledit élément piston.

9. Vanne selon la revendication 3, dans laquelle ladite température prédéterminée est comprise entre 200°C et 320°C.

10. Vanne selon la revendication 3, comprenant en outre des moyens destinés à empêcher l'exposition de ladite matière aux fluides intérieurs de la vanne.

11. Vanne selon la revendication 1, comprenant en outre un bouchon (216, 316) monté de façon à pouvoir coulisser dans ledit premier canal entre une première position bloquant tout écoulement de fluide dans ledit alésage et une seconde position permettant un écoulement de fluide dans ledit alésage, ladite matière, lorsqu'elle est à l'état solide, empêchant ledit bouchon de se déplacer de ladite première position vers ladite seconde position et permettant audit bouchon de se déplacer de ladite première position vers ladite seconde position lorsqu'elle est à l'état liquide.

12. Vanne selon la revendication 11, dans laquelle ledit bouchon (216, 316) présente une chambre (228, 328) et ladite matière fusible (218, 318) à l'état liquide s'écoule vers l'intérieur de ladite chambre.

13. Vanne selon la revendication 12, dans laquelle ladite matière fusible (318) comporte une partie (319) faisant saillie dans ladite chambre (328), tandis que ladite matière fusible est à l'état solide.

14. Vanne selon la revendication 11, comprenant en outre des moyens destinés à retenir ledit bouchon dans ledit premier canal.

0 088 077

Fig. 1

1

Fig. 2

Fig. 3

Fig. 4

Fig. 5